# EUROPÄISCHE PATENTANMELDUNG

(11) **EP 2 262 087 A1**
(43) Veröffentlichungstag der Anmeldung: **15.12.2010**
(21) Anmeldenummer: 09162381.9
(22) Anmeldetag: 10.06.2009
(51) Int. Cl.: H02M 3/335, H02M 7/48

(54) **Wandlerschaltung mit einem Umrichter**

(71) Anmelder: ABB Research Ltd., 8050 Zürich (CH)
(72) Erfinder: Coccia, Antonio, CH-5400, Baden (CH); Canales, Francisco, CH-5405, Baden-Dättwil (CH); Ho, Ngai-Man, CH-5442, Fislisbach (CH); Steimer, Peter, CH-5420, Ehrendingen (CH); De-Novaes, Yales, CH-5415, Nussbaumen (CH)
(74) Vertreter: ABB Patent Attorneys

(57) **Zusammenfassung**

Die Erfindung betrifft eine Wanderschaltung (1) zum Umwandeln einer Eingangsgröße in eine Ausgangsgröße, umfassend:
- einen Umrichter (4) zum Empfangen einer von der Eingangsgröße abhängigen Umrichtereingangsgröße und zum Generieren einer getakteten Umrichterausgangsgröße (U_{A});
- einen Transformator (6) zum Umsetzen einer von der Umrichterausgangsgröße (U_{AB}) des Umrichter (2) abhängigen Primärgröße in eine Sekundärgröße;
- eine Resonanzschaltung (5), über die der Umrichter mit dem Transformator (6) verbunden ist, und die so dimensioniert ist, dass als Primärgröße eine Größe bereitgestellt wird, die von der Umrichterausgangsgröße und von einer vorgegebenen Schaltfrequenz des Umrichters (4) abhängt;

wobei der Umrichter (4) einem dreistufigem Umrichter entspricht.

## Beschreibung

### Technisches Gebiet

Die Erfindung betrifft Wandlerschaltungen, insbesondere Wandlerschaltungen, die einen Umrichter, eine Resonanzschaltung und einen Transformator aufweisen.

### Stand der Technik

Wandlerschaltungen werden heute für viele Anwendungsbereiche verwendet. Eine Wandlerschaltung kann beispielsweise der Umsetzung einer Eingangswechselspannung in eine einstellbare Ausgangswechselspannung dienen. Dabei wird häufig eine galvanische Trennung zwischen dem Eingang und dem Ausgang der Wandlerschaltung mit Hilfe eines Transformators vorgesehen.

Solche Wandlerschaltungen können vorsehen, dass die Eingangswechselspannung zunächst in eine Gleichspannung umgesetzt wird. Die Gleichspannung kann dann dem Umrichter zugeführt werden, so dass eine variable Umrichterausgangsspannung als Wechselspannung bereitgestellt werden kann. Die Umrichterausgangsspannung dient zum Betreiben einer Primärseite eines Transformators. Der sekundärseitige Transformatorausgang wird gleichgerichtet und anschließend eine Gleichspannung ausgegeben oder mit Hilfe eines Ausgangs-DC/AC-Wandler die entsprechende Ausgangswechselspannung erzeugt.

Eine Wandlerschaltung mit einem Umrichter und einem Transformator ist beispielsweise aus der DE 197 50 041 C1 bekannt. Die dort gezeigte Wandlerschaltung umfasst einen Hochsetzsteller, an den ausgangsseitig ein Umrichter geschaltet ist, um eine Wechselspannung zum Anlegen an eine Primärseite eines Transformators bereitzustellen. Weiterhin ist ein kapazitiver Energiespeicher vorgesehen, der mit dem Transformator verbunden ist. Eine Sekundärseite des Transformators ist über einen Brückengleichrichter mit einem Ausgang der Wandlerschaltung verbunden, um so eine gewandelte Ausgangsgleichspannung zur Verfügung zu stellen. Der Hochsetzsteller und der Umrichter werden derart angesteuert, dass der kapazitive Energiespeicher, die Drossel- und die Streuinduktivität des Transformators einen Resonanzschwingkreis bilden, d. h. der Hochsetzsteller legt ausgangsseitig an die kapazitiven Energiespeicher eine entsprechende Wechselspannung durch Takten der Gleichspannung an seinem Eingang an, so dass der Resonanzschwingkreis in Resonanz versetzt wird.

Bei derart aufgebauten Wandlerschaltungen stellen insbesondere bei hohen abgerufenen Leistungen die Schaltverluste der Leistungshalbleiterschalter des Hochsetzstellers und des Umrichters einen Nachteil dar, der zu einer beschleunigten Alterung der Leistungshalbleiterschalter und damit zu einer erhöhten Ausfallrate führt. Dadurch ist die Zuverlässigkeit der gesamten Wandlerschaltung begrenzt.

Aus der Druckschrift US 6,344,979 B1 ist eine Wandlerschaltung bekannt, die einen Resonanzumrichter, einen Transformator und einen Gleichrichter aufweist. Zwischen dem Resonanzumrichter und dem Transformator ist eine CLL-Resonanzschaltung vorgesehen.

Resonanzschaltungen zur Realisierung von Resonanzumrichtern sind aus der Druckschrift D. Fu, F. C. Lee et al., "Novel Multi-Element Resonant Converters for Front-end DC/DC Converters", IEEE Power Electronics Specialists Conference, 2008, Seiten 250-256, Rhodes, Juni 2008 bekannt. Dort ist eine DC/DC-Wandlerschaltung mit einem zweistufigen Umrichter, einer nachgeschalteten Resonanzschaltung, einem Transformator und einem Gleichrichter dargestellt. Um hohe Ströme bei Überlasten zu vermeiden, wird vorgeschlagen, die Schaltfrequenz zu erhöhen, so dass sich die Impedanz der Resonanzschaltung ebenfalls erhöht. Aufgrund des üblicherweise flachen Anstiegs der Spannungsverstärkung bei einer Erhöhung der Schaltfrequenz über die Resonanzfrequenz hinaus muss die Schaltfrequenz um das Mehrfache höher als die Nominalfrequenz eingestellt werden. Dies kann unter Umständen bei Hochfrequenzresonanzwandlern zu Schaltfrequenzen führen, die durch herkömmliche Bauelemente nicht erreicht werden können.

Weiterhin wird vorgeschlagen, eine pulsweitenmodulierte Steuerung zu verwenden, um die Eingangsspannung der Resonanzschaltung zu verringern. Dadurch kann der Strom ebenfalls verringert werden. Jedoch verliert man bei diesem Verfahren die Möglichkeit, bei starker Überlast das spannungslose Schalten der Leistungstransistoren gemäß einem ZVS-Betrieb (ZVS: Zero Voltage Switching, Schalten im Nulldurchgang) zu erreichen.

### Darstellung der Erfindung

Es ist daher Aufgabe der vorliegenden Erfindung, eine Wandlerschaltung zur Verfügung zu stellen, bei der der Strom z. B. bei Überlastzuständen begrenzt werden kann, ohne die maximale Schaltfrequenz der Leistungshalbleiterschalter zu überschreiten und ohne die Möglichkeit des ZVS-Betriebs aufzugeben.

Diese Aufgabe wird durch die Wandlerschaltung gemäß Anspruch 1 sowie das Wandlersystem gemäß dem nebengeordneten Anspruch gelöst.

Weitere vorteilhafte Ausgestaltungen sind in den abhängigen Ansprüchen angegeben.

Gemäß einem ersten Aspekt ist eine Wanderschaltung zum Umwandeln einer Eingangsgröße in eine Ausgangsgröße vorgesehen. Die Wandlerschaltung umfasst: - einen Umrichter zum Empfangen einer von der Eingangsgröße abhängigen Umrichtereingangsgröße und zum Generieren einer getakteten Umrichterausgangsgröße;
- einen Transformator zum Umsetzen einer von der Umrichterausgangsgröße des Umrichter abhängigen Primärgröße in eine die Ausgangsgröße bestimmende Sekundärgröße;
- eine Resonanzschaltung, über die der Umrichter mit dem Transformator verbunden ist, und die so dimensioniert ist, dass als Primärgröße eine Größe bereitgestellt wird, die von der Umrichterausgangsgröße und von einer vorgegebenen Schaltfrequenz des Umrichters abhängt;
wobei der Umrichter einem dreistufigem Umrichter entspricht.

Die obige Wandlerschaltung ermöglicht in einfache Weise den Spannungsstress über den Leistungshalbleiterschalter des Umrichters zu reduzieren und es somit zu ermöglichen, die Leistungshalbleiterschalter im Vergleich zu zweistufigen Umrichtern mit einer höheren Schaltfrequenz zu betreiben. Dadurch kann die Resonanzfrequenz der Resonanzschaltung erhöht werden, z.B. indem die Kennwerte der darin verwendeten Bauelelemente, wie Induktvitäten und Kapazitäten verringert. Deren Baugrößen lassen sich dadurch reduzieren.

Gemäß einer weiteren Ausführungsform kann der dreistufige Umrichter eine Serienschaltung eines ersten Leistungshalbleiterschalters, eines zweiten Leistungshalbleiterschalters, eines dritten Leistungshalbleiterschalters und eines vierten Leistungshalbleiterschalters aufweisen, wobei ein erster Anschluss des ersten Leistungshalbleiterschalters mit einem hohen Potenzial und ein zweiter Anschluss des vierten Leistungshalbleiterschalters mit einem niedrigen Potenzial verbunden ist, und wobei ein erster Anschluss des zweiten Leistungshalbleiterschalters mit einem zweiten Anschluss des ersten Leistungshalbleiterschalters und ein erster Anschluss des vierten Leistungshalbleiterschalters mit einem zweiten Anschluss des dritten Leistungshalbleiterschalters verbunden ist.

Weiterhin kann ein zweiter Anschluss des ersten Leistungshalbleiterschalters und ein erster Anschluss des vierten Leistungshalbleiterschalters über eine Umrichterkapazität verbunden sein, wobei die Umrichterausgangsgröße an einem ersten Umrichterausgangsanschluss, der einem ersten Anschluss des dritten Leistungshalbleiterschalters entspricht, und an einem zweiten Umrichterausgangsanschluss abgreifbar ist, wobei der zweite Umrichterausgangsanschluss dem zweiten Anschluss des vierten Leistungshalbleiterschalters entspricht.

Gemäß einer Ausführungsform kann ein Zwischenkreispunkt zwischen zwei in Reihe geschalteten Eingangskapazitäten definiert sein, wobei der Zwischenkreispunkt mit eine zweiten Anschluss des zweiten Leistungshalbleiterschalters verbunden ist, und wobei die Umrichterausgangsgröße an einem ersten Umrichterausgangsanschluss, der einem ersten Anschluss des zweiten Leistungshalbleiterschalters entspricht, und an einem zweiten Umrichterausgangsanschluss, der einem zweiten Anschluss des dritten Leistungshalbleiterschalters entspricht, abgreifbar ist.

Alternativ kann ein Zwischenkreispunkt zwischen zwei in Reihe geschalteten Eingangskapazitäten definiert sein, wobei der Zwischenkreispunkt mit einem zweiten Anschluss des zweiten Leistungshalbleiterschalters verbunden ist, und wobei die Umrichterausgangsgröße an einem ersten Umrichterausgangsanschluss, der einem ersten Anschluss des zweiten Leistungshalbleiterschalters entspricht, und an einem zweiten Umrichterausgangsanschluss abgreifbar ist, einem zweiten Anschluss des dritten Leistungshalbleiterschalters entspricht.

Weiterhin können die Leistungshalbleiterschalter ganz oder teilweise als MOSFETs, JFETs, BJTs oder IGBTs auf Siliziumkarbidbasis ausgebildet sein.

Die Wandlerschaltung kann einen Gleichrichter zum Gleichrichten der von dem Transformator bereitgestellten Sekundärgröße aufweisen, um eine Gleichrichterausgangsgröße bereitzustellen, die der Ausgangsgröße entspricht oder von der die Ausgangsgröße abhängt.

Ferner kann die Wandlerschaltung einen Ausgangs-DC/AC-Wandler umfassen, der dem Gleichrichter nachgeschaltet ist, um eine Wechselgröße aus der Gleichrichterausgangsgröße als Ausgangsgröße zu generieren.

Alternativ oder zusätzlich kann die Wandlerschaltung einen Eingangs-AC/DC-Wandler zum Generieren der Umrichtereingangsgröße aus der Eingangsgröße, die eine Wechselgröße darstellt, umfassen.

Gemäß einer Ausführungsform kann die Resonanzschaltung eine erste Resonanzinduktivität, die in Reihe zu einer Primärseite des Transformators geschaltet ist, eine zweite Resonanzinduktivität die parallel zur Primärseite des Transformators geschaltet ist, und eine Resonanzkapazität, die in Reihe zur Primärseite des Transformators geschaltet ist, aufweisen, um eine Bandpass-Filter-Charakteristik zu erhalten.

Weiterhin kann die Resonanzschaltung so ausgebildet sein, um zusätzlich eine Sperrfilter-Charakteristik zu erhalten.

Der Transformator kann mehrere Sekundärspulen aufweisen, wobei Ausgänge der Sekundärspulen gleichgerichtet werden und die gleichgerichteten Ausgänge parallel geschaltet sind.

Gemäß einer weiteren Ausführungsform kann eine Steuereinheit vorgesehen sein, um Leistungshalbleiterschalter des Umrichters gemäß einer Schaltfrequenz so anzusteuern, dass die Umrichterausgangsgröße mit einer Frequenz bereitgestellt wird, die kleiner ist als eine Resonanzfrequenz der Resonanzschaltung.

Gemäß einem weiteren Aspekt kann ein Wandlersystem mit mehreren der obigen Wandlerschaltungen vorgesehen sein, wobei Eingangsseiten der mehreren Wandlerschaltungen seriell verschaltet sind und Wandlerausgänge miteinander parallel verschaltet sind.

### Kurze Beschreibung der Zeichnungen

Bevorzugte Ausführungsformen werden nachfolgend anhand der beigefügten Zeichnungen näher erläutert. Es zeigen:
- Fig. 1: eine schematische Darstellung einer Wandlerschaltung;
- Fig. 2a bis 2c: verschiedene Eingangs-AC/DC-Wandler für die Wandlerschaltung gemäß der Figur 1;
- Fig. 3a und 3b: alternative Ausgestaltungen der Eingangs-AC/DC-Wandler für ein Dreiphasensystem;
- Fig. 4a bis 4c: alternative Ausgestaltungen des dreistufigen Umrichters;
- Fig. 5: eine Darstellung einer alternativen Ausführung einer Resonanzschaltung;
- Fig. 6: eine Darstellung der Spannungsverstärkung über der Schaltfrequenz des Umrichters; und
- Fig. 7: ein vereinfachtes Blockdiagramm, das eine mögliche Ausgestaltung eines Wandlersystems mit mehreren Wandlerschaltungen darstellt.

### Wege zur Ausführung der Erfindung

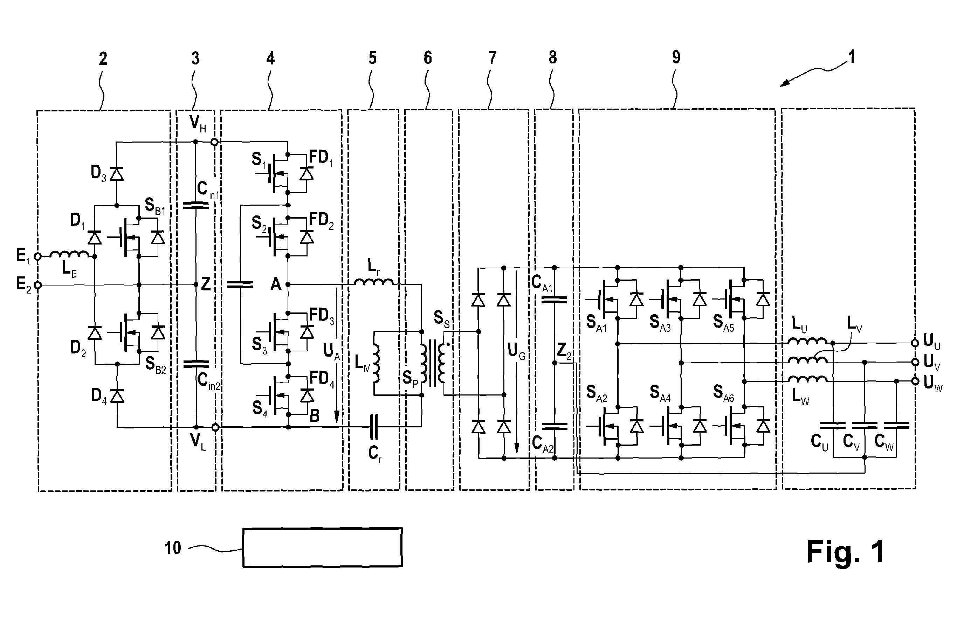

Figur 1 zeigt eine schematische Darstellung einer Wandlerschaltung 1. Die Wandlerschaltung 1 umfasst einen Eingangs-AC/DC-Wandler 2 zum Bereitstellen einer Eingangsgleichspannung U_{In} zwischen einem hohen Eingangspotential V_{H} und einem niedrigen Eingangspotential V_{L}. Der Eingangs-AC/DC-Wandler 2 ist als dreistufiger Boost-AC/DC-Wandler ausgebildet und umfasst eine Eingangsinduktivität L_{E}, eine erste Eingangsdiode D₁, eine zweite Eingangsdiode D₂, eine dritte Eingangsdiode D₃ und eine vierte Eingangsdiode D₄. Weiterhin sind ein erster Eingangshalbleiterschalter S_{B1} und ein zweiter Eingangshalbleiterschalter S_{B2} vorgesehen.

Im Detail ist ein erster Eingangsanschluss E₁ über die Eingangsinduktivität L_{E} mit einem Anodenanschluss der ersten Eingangsdiode D₁ und mit einem Kathodenanschluss der zweiten Eingangsdiode D₂ verbunden. Ein Kathodenanschluss der ersten Eingangsdiode D₁ ist mit einem Anodenanschluss der dritten Eingangsdiode D₃ verbunden und ein Anodenanschluss der zweiten Eingangsdiode D₂ ist mit einem Kathodenanschluss der vierten Eingangsdiode D₄ verbunden. Der zweite Eingangsanschluss E₂ ist über den ersten Eingangshalbleiterschalter S_{B1} mit dem Anodenanschluss der dritten Eingangsdiode D₃ und über den zweiten Eingangshalbleiterschalter S_{B2} mit dem Kathodenanschluss der vierten Eingangsdiode D₄ verbunden. An dem Kathodenanschluss der dritten Eingangsdiode D₃ wird das hohe Eingangspotential V_{H} und an einem Anodenanschluss der vierten Eingangsdiode D₄ das niedrige Eingangspotential V_{L} bereitgestellt.

Die Eingangshalbleiterschalter S_{B1} und S_{B2} werden über eine Steuereinheit 10 so angesteuert, dass sie mit einem Phasenversatz von 180° schalten. Bei vorgegebener Schaltfrequenz führt dies zu einer Frequenz über der Eingangsinduktivität L_{E} , die der doppelten Schaltfrequenz entspricht.

Mit Hilfe des Eingangs-AC/DC-Wandlers 2 kann der Leistungsfaktor verbessert werden und die Verzerrung des Eingangsstroms durch Oberschwingungen reduziert werden. Weiterhin kann die ausgangsseitig des Eingangs-AC/DC-Wandlers 2 bereitgestellte Eingangsgleichspannung U_{In} (Umrichtereingangsspannung) zwischen dem hohen Eingangspotential V_{H} und dem niedrigen Eingangspotential V_{L} variabel durch entsprechendes Schalten der Eingangshalbleiterschalter S_{B1} und S_{B2} z.B. gemäß einer Pulsweitenmodulation, eingestellt werden. Die dreistufige Struktur des Eingangs-AC/DC-Wandlers 2 hat darüber hinaus den Vorteil, dass maximal nur die halbe Eingangsgleichspannung U_{In} über die einzelnen Bauelemente, insbesondere die Eingangshalbleiterschalter S_{B1} und S_{B2} anliegt, wodurch die Leistungsanforderung an diese Bauelemente reduziert ist und deren Dimensionierung somit einfacher wird.

Vorzugsweise können, um die Schaltverluste in der dritten und vierten Eingangsdiode D₃ und D₄ aufgrund des Reverse-Recovery-Stromes (in Sperrrichtung fließender Strom, bis die Diode in den Sperrzustand übergeht) zu verringern, SiC-Schottky-Dioden oder SiC PiN-Dioden verwendet werden. Weiterhin können alternativ oder zusätzlich die Eingangshalbleiterschalter S_{B1} und S_{B2} mit einem SiC-Material implementiert werden. Dies reduziert die Ausschaltverluste. Damit kann der Eingangs-AC/DC-Wandler 2 bei einer hohen Schaltfrequenz trotz hoher Eingangsspannungen betrieben werden.

Zwischen dem hohen Eingangspotential V_{H} und dem niedrigen Eingangspotential V_{L} ist eine Kapazitäten-Reihenschaltung 3 von zwei Eingangskapazitäten C_{In1}, C_{In2} vorgesehen. Die Eingangskapazitäten C_{In1}, C_{In2} dienen im Wesentlichen zum Glätten der Eingangsgleichspannung U_{In} bzw. der Umrichtereingangsspannung. Weiterhin wird durch die Reihenschaltung 3 ein Zwischenkreispunkt Z definiert, der zwischen den Eingangskapazitäten C_{In1} und C_{In2} vorgesehen ist, mit dem zweiten Eingangsanschluss E₂ verbunden.

Die Eingangspotentiale V_{H} und V_{L} sind weiterhin mit einem Dreipegel-Umrichter 4 verbunden. Der Umrichter 4 weist vier Leistungshalbleiterschalter S₁ bis S₄ auf, die in Reihe verschaltet sind. Ein Knoten zwischen einem ersten der Leistungshalbleiterschalter S₁ und einem zweiten der Leistungshalbleiterschalter S₂ und ein zweiter Knoten zwischen einem dritten der Leistungshalbleiterschalter S₃ und einem vierten der Leistungshalbleiterschalter S₄ sind über eine Umrichterkapazität C_{U} miteinander verbunden. Im Detail sind ein erster Anschluss des ersten Leistungshalbleiterschalters S₁ mit dem hohen Eingangspotential V_{H} und ein zweiter Anschluss des ersten Leistungshalbleiterschalters S₁ mit einem ersten Anschluss des zweiten Leistungshalbleiterschalters S₂ und mit einem ersten Anschluss der Umrichterkapazität C_{U} verbunden. Ein zweiter Anschluss des zweiten Leistungshalbleiterschalters S₂ ist mit einem ersten Anschluss des dritten Leistungshalbleiterschalters S₃ verbunden. Ein zweiter Anschluss des dritten Leistungshalbleiterschalters S₃ ist mit einem zweiten Anschluss der Umrichterkapazität C_{U} und mit einem ersten Anschluss des vierten Leistungshalbleiterschalters S₄ verbunden. Ein zweiter Anschluss des vierten Leistungshalbleiterschalters S₄ ist mit dem niedrigen Eingangspotential V_{L} verbunden. Ein erster Umrichter-Ausgangsanschluss A wird durch den zweiten Anschluss des zweiten Leistungshalbleiterschalters S₂ bzw. durch den ersten Anschluss des dritten Leistungshalbleiterschalters S₃ definiert und ein zweiter Umrichter-Ausgangsanschluss B wird durch das niedrige Eingangspotential V_{L} bzw. durch den zweiten Anschluss des vierten Leistungshalbleiterschalters S₄ definiert.

Durch die Ausbildung des Umrichters 4 in einem dreistufigen Aufbau kann die Spannungsbelastung der darin enthaltenen Bauelemente, insbesondere die Spannungsbelastung der Leistungshalbleiterschalter S₁ bis S₄ auf maximal die Hälfte der Eingangsspannung U_{In} reduziert werden. Zusätzlich können die Leistungshalbleiterschalter S₁ bis S₄ auch als SiC-Bauelemente ausgebildet werden, um die Leistungsfähigkeit des Umrichters 4 trotz hoher Eingangsspannungen zu verbessern.

Die Leistungshalbleiterschalter S₁ bis S₄ werden durch die Steuereinheit 10 angesteuert. Die Leistungshalbleiterschalter S₁ bis S₄ können gemäß einer Zweipegel-Modulationsstrategie oder einer Dreipegel-Modulationsstrategie betrieben werden, ohne dass die Leistungsfähigkeit des Umrichters 4 beeinträchtigt wird. Für beide Modulationsstrategien kann der Umrichter 4 so betrieben werden, dass er als elektronischer Transformator mit einem variablen 2:1-Windungsverhältnis arbeitet.

Beim Zweipegel-Betrieb werden der erste Leistungshalbleiterschalter S₁ und der zweite Leistungshalbleiterschalter S₂ bzw. der dritte Leistungshalbleiterschalter S₃ und der vierte Leistungshalbleiterschalter S₄ jeweils gleichzeitig geschaltet, so dass entweder das hohe Eingangspotential V_{H} oder das niedrige Eingangspotential V_{L} an dem ersten Ausgangsknoten A angelegt wird. Eine bestimmte Umrichterausgangsspannung U_{A} (Wechselspannung) zwischen dem ersten Umrichterausgangsanschluss A und dem zweiten Umrichterausgangsanschluss B kann zudem durch eine Pulsweitenmodulation beim Schalten der einzelnen Leistungshalbleiterschalter gemäß einem Tastverhältnis eingestellt werden.

Beim Dreipegel-Modulationsbetrieb können zusätzlich zu den Schaltzuständen beim Zweipegel-Betrieb auch die Schaltzustände vorgesehen werden, bei denen der erste und der dritte Leistungshalbleiterschalter S₁ und S₃ geschlossen und die übrigen zweiten und vierten Leistungshalbleiterschalter S₂ und S₄ geöffnet sind bzw. umgekehrt, um am ersten Umrichterausgangsanschluss A ein Potential auszugeben, das der halben Eingangsgleichspannung U_{In} entspricht. Dies gilt, vorausgesetzt, dass die Spannung über der Umrichterkapazität C_{U} bei einer auszugebenden halben Eingangsspannung durch wechselweises Schließen des ersten und dritten Leistungshalbleiterschalters S₁, S₃ bzw. des zweiten und vierten Leistungshalbleiterschalters S₂, S₄, auf die halbe Eingangsgleichspannung U_{In} aufgeladen wird bzw. die entsprechende Ladung der Umrichterkapazität C_{U}, die der halben Eingangsgleichspannung U_{In} entspricht, beibehalten wird.

Die Umrichterausgangsspannung U_{A} zwischen dem ersten und dem zweiten Umrichterausgangsanschluß A, B des Dreipegel-Umrichters 4 wird über eine Resonanzschaltung 5 an eine Primärspule S_{P} eines Transformators 6 angelegt. Die Resonanzschaltung 5 umfasst eine erste Resonanzinduktivität L_{R} und eine zweite Resonanzinduktivität L_{M} sowie eine (erste) Resonanzkapazität Cᵣ. In der gezeigten Resonanzschaltung 5 ist die erste Resonanzinduktivität L_{R} mit einem ersten Anschluss mit dem ersten Umrichter-Ausgangsanschluss A des Umrichters 4 verbunden und ein zweiter Anschluss der ersten Resonanzinduktivität L_{R} mit einem ersten Anschluss einer Primärspule S_{P} des Transformators 6 verbunden. Weiterhin ist ein zweiter Anschluss der Primärspule S_{P} mit einem ersten Anschluss der Resonanzkapazität Cᵣ verbunden. Ein zweiter Anschluss der Resonanzkapazität Cᵣ ist mit dem zweiten Umrichter-Ausgangsanschluss B des Umrichters 4 verbunden. Die zweite Resonanzinduktivität L_{M} ist mit ihrem ersten Anschluss mit dem ersten Anschluss der Primärspule S_{P} und mit ihrem zweiten Anschluss mit dem zweiten Anschluss der Primärspule S_{P} verbunden. Somit ist die zweite Resonanzinduktivität L_{M} parallel zu der Primärspule S_{P} geschaltet, während die erste Resonanzinduktivität L_{R} in Reihe zu der Primärspule S_{P} und der Resonanzkapazität Cᵣ angeschlossen ist.

Mit Hilfe der Resonanzschaltung 5 kann ein Schalten der Leistungshalbleiterschalter S₁ bis S₄ beim Spannungsnulldurchgang (ZVS: Zero Voltage Switching) und dadurch reduzierte Abschaltverluste erreicht werden. Der Umrichter 4 wird unterhalb der Resonanzfrequenz der Resonanzschaltung 5 betrieben und der Magnetisierungsstrom in der zweiten Resonanzinduktivität L_{M} wird verwendet, um das Schalten im Nulldurchgang zu erreichen. Weiterhin wird der Umrichter 4 in einem Bereich betrieben, bei dem die Gleichtaktverstärkung von den Lastschwankungen unabhängig wird. Dadurch kann der Umrichter 4 im Leerlaufbetrieb betrieben werden, was eine einfache Optimierung des Transformators 6 ermöglicht.

Die Leistungshalbleiterschalter S₁ bis S₄ können jeweils mit Freilaufdioden FD₁ bis FD₄ versehen sein, um die Leistungshalbleiterschalter S₁ bis S₄ zu schützen. Entsprechend den Eigenschaften der Resonanzschaltung 5 können die Freilaufdioden FD₁ bis FD₄ stromlos geschaltet werden, wodurch die Verluste durch die Reverse-Recovery-Ströme eliminiert werden. Somit können ultraschnelle Siliziumdioden gemäß dem Stand der Technik verwendet werden.

Eine Sekundärspule S_{S} des Transformators 6, die mit der Primärspule S_{P} transformatorisch gekoppelt ist, ist mit einem Ausgangsgleichrichter 7 verbunden, der in Form einer Diodenbrückenschaltung ausgebildet ist. Ausgangsseitig des Ausgangsgleichrichters 7 liegt eine Geleichrichter-Ausgangsspannung U_{G} an, an die eine weitere Kapazitäten-Serienschaltung 8 mit zwei seriell verschalteten Ausgangskapazitäten C_{A1}, C_{A2} angelegt ist.

Die Gleichrichter-Ausgangsspannung U_{G} kann direkt einem Verbraucher zugeführt werden. Alternativ kann die Gleichrichter-Ausgangsspannung U_{O} an einen dreiphasigen Ausgangs-DC/AC-Wandler 9 angelegt werden, so dass eine dreiphasige Ausgangsspannung U_{O}, U_{V}, U_{W} bereitgestellt werden kann. Der dreiphasige Ausgangs-DC/AC-Wandler 9 kann, wie in Figur 1 beispielhaft dargestellt, mit Hilfe von drei zueinander phasenversetzt getakteten Inverterbrücken ausgebildet sein. Auch andere Ausgestaltungen des Ausgangs-DC/AC-Wandlers 9 sind denkbar.

Ausgangsseitig können Ausgangsinduktivitäten L_{U}, L_{V}, L_{W} vorgesehen sein, um eine Glättung der Ausgangsströme zu erreichen. Weiterhin können die einzelnen Phasenausgänge über jeweilige Phasenkapazitäten C_{U}, C_{V}, C_{W} mit einem zwischen den beiden Ausgangskapazitäten C_{A1}, C_{A2} gebildeten weiteren Zwischenkreispunkt Z2 verbunden sein.

Die Leistungsfähigkeit des Ausgangs-DC/AC-Wandlers 9 kann durch die Verwendung von SiC-Bauelementen verbessert werden. Insbesondere können aufgrund der Eigenschaften des SiC-Materials die Leitfähigkeits- und Schaltverluste der Bauelemente reduziert werden.

Der Ausgangs-DC/AC-Wandler 9 kann bei einer höheren Schaltfrequenz betrieben werden, ohne dass erhöhte Schaltverluste auftreten. Dadurch lassen sich die Ausgangsfilter mit geringerem Aufwand implementieren.

Der Ausgangs-DC/AC-Wandler 9 wird mit Ausgangshalbleiterschaltern S_{A1} bis S_{A6} aufgebaut, die im gezeigten Beispiel für jeden Phasenausgang in Form einer Reihenschaltung von jeweils zwei Ausgangshalbleiterschaltern S_{A1} bis S_{A6} zwischen den Potenzialen der Gleichrichter-Ausgangsspannung U_{G} ausgebildet ist. Jeweils zwischen den zwei Ausgangshalbleiterschaltern einer Reihenschaltung wird eine Phase der Ausgangsspannung U_{O}, U_{V}, Uw abgegriffen. Die Ausgangshalbleiterschalter S_{A}, bis S_{A6} werden durch die Steuereinheit 10 angesteuert, um zur Erzeugung der dreiphasigen Ausgangsspannung U_{O}, U_{V}, U_{W}
Diese um 120° phasenversetzt wechselweise in an sich bekannter Weise anzusteuern.

Es kann vorgesehen sein, die Ausgangshalbleiterschalter S_{A1} bis S_{A6} mit herkömmlichen Silizium-Bauelementen wie z. B. IGBTs auszubilden, die mit SiC-Schottky-Dioden kombiniert werden. Dies reduziert die Verluste aufgrund der Reverse-Recovery-Ströme in den Dioden. Zusätzlich werden die Einschaltverluste in den Ausgangshalbleiterschaltern S_{A1} bis S_{A6} minimiert.

Als Eingangshalbleiterschalter S_{B1}, S_{B2}, Leistungshalbleiterschalter S₁ - S₄ und Ausgangshalbleiterschalter S_{1A1} - S_{A6} werden vorzugsweise bidirektionale Leistungshalbleiterschalter, wie z. B. IGBTs, IGCTs, Thyristoren und dergleichen verwendet. Vorzugsweise können die bidirektionalen Leistungshalbleiterschalter jeweils als ein integrierter über die Ansteueranschlüsse kommutierter Thyristor (IGCT: Integrated Gate-Commutated Thyristor) mit einer zugehörigen parallel geschalteten Freilaufdiode ausgebildet sein. Ein solcher Thyristor weist besonders geringe Wirkleistungsverluste bei gleichzeitig hoher Robustheit, vor allem bei hohen Spannungen und insbesondere Überspannungen, auf. Alternativ ist es möglich, die bidirektionalen Leistungshalbleiterschalter jeweils als einen Bipolartransistor mit isoliert angeordnetem Steueranschluss (IGBT: Integrated Gate Bipolar Transistor) mit einer zugehörigen parallel geschalteten Freilaufdiode auszubilden. Ein solcher Leistungshalbleiterschalter zeichnet sich durch eine hohe Schaltfrequenz und damit durch geringe Schwingungen der geschalteten Ströme und Spannungen aus.

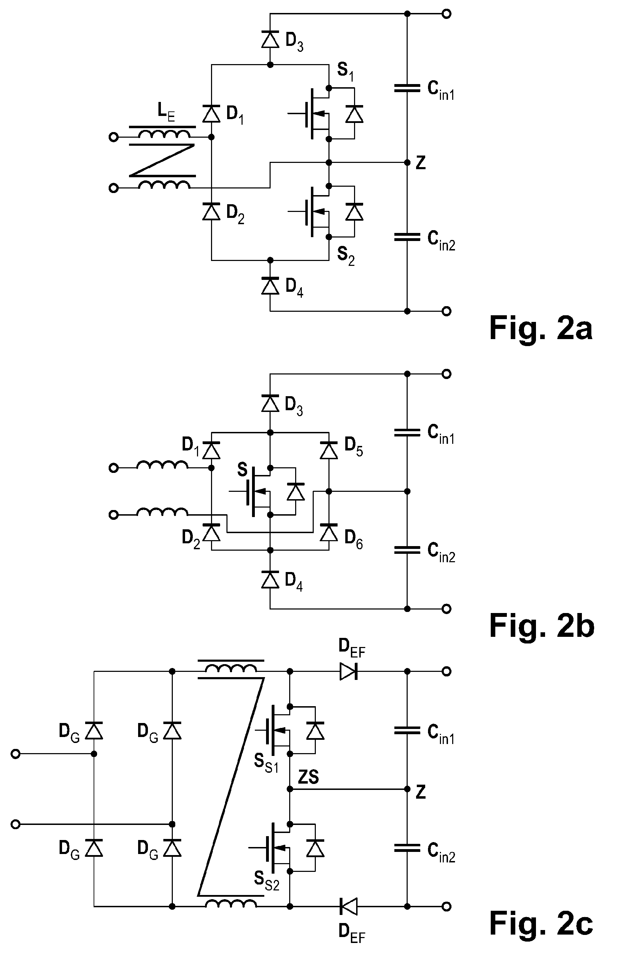

In den Figuren 2a bis 2c sind verschiedene Ausgestaltungen des Eingangs-AC/DC-Wandlers 2 dargestellt. Der Eingangs-AC/DC-Wandler der Ausführungsform der Figur 2a unterscheidet sich von dem in Figur 1 gezeigten Eingangs-AC/DC-Wandler 2 lediglich dadurch, dass die Eingangsinduktivität L_{E} aufgesplittet ist. Die einzelnen Eingangsinduktivitäten sind dabei in der gleichen magnetischen Struktur angeordnet und dadurch miteinander transformatorisch gekoppelt, um eine Flussauslöschung zu erreichen. Dadurch kann die Größe und das Gewicht der Eingangsinduktivität minimiert werden.

Der Eingangs-AC/DC-Wandler der Ausführungsform der Figur 2b weist neben den ersten bis vierten Eingangsdioden D₁, D₂, D₃, D₄ noch eine fünfte und eine sechste Eingangsdiode D₅, D₆ sowie einen weiteren Eingangshalbleiterschalter S auf. Während die Verschaltung der ersten bis vierten Eingangsdiode der Eingangsinduktivität der eingangs erläuterten Verschaltung bezüglich der Ausführungsform der Figur 1 entspricht, sind die Eingangshalbleiterschalter S₁, S₂ durch die fünfte Eingangsdiode D₅ bzw. die sechste Eingangsdiode D₆ ersetzt und der Kathodenanschluss der ersten Diode und der Anodenanschluss der zweiten Diode miteinander über den weiteren Eingangshalbleiterschalter S verbunden. Im Detail ist ein Anodenanschluss der fünften Eingangsdiode D₅ mit dem zweiten Eingangsanschluss und ein Kathodenanschluss der fünften Eingangsdiode D₅ mit dem Kathodenanschluss der ersten Eingangsdiode D₁ sowie dem entsprechenden Anschluss des weiteren Eingangshalbleiterschalters S verbunden. Ein Kathodenanschluss der sechsten Eingangsdiode D₆ ist mit dem zweiten Eingangsanschluss E₂ und ein Anodenanschluss der sechsten Eingangsdiode D₆ mit einem Anodenanschluss der zweiten Eingangsdiode D₂ verbunden.

Die Ausführungsform der Figur 2c zeigt einen Eingangs-AC/DC-Wandler, der einen Dioden-Brückengleichrichter mit Gleichrichterdioden D_{G} aufweist, der ausgangsseitig über miteinander gekoppelte Eingangsinduktivitäten (zur Flussauslöschung zur Vermeidung einer magnetischen Sättigung im Material des Magnetkerns) mit einer einfachen Stellerschaltung aus zwei in Reihe geschalteten Stellerhalbleiterschaltern S_{S1}, S_{S2} verbunden ist. Ein Zwischenkreispunkt ZS zwischen den beiden Eingangshalbleiterschaltern ist dabei mit dem Zwischenkreispunkt Z zwischen den Eingangskapazitäten C_{In1}, C_{In2} der Kapazitäts-Reihenschaltung 3 verbunden. Die über die gekoppelten Eingangsinduktivitäten bereitgestellte Gleichrichterspannung, die ausgangsseitig des Brückengleichrichters zur Verfügung gestellt wird, ist über jeweilige gleichgerichtete Freilaufdioden D_{EF} mit den Ausgängen des Eingangs-AC/DC-Wandlers verbunden, um dort das hohe Eingangspotential V_{H} bzw. das niedrige Eingangspotential V_{L} bereitzustellen. D.h. das hohe Eingangspotential V_{H} ist mit einem Anodenanschluss einer ersten der Freilaufdioden D_{EF} und das niedrige Eingangspotential V_{L} ist mit einem Kathodenanschluss einer zweiten der Freilaufdioden D_{EF} verbunden.

Die Eingangs-AC/DC-Wandler der Ausführungsformen der Figuren 2a bis 2c weisen im Wesentlichen die gleichen Vorteile auf, wie der Eingangs-AC/DC-Wandler der Ausführungsform der Figur 1, d.h. es können geringere Spannungsbelastungen in den wesentlichen Bauelementen erreicht werden. Kombiniert mit der Verwendung von SiC-Bauelementen führt dies zu guten Leistungsparametern für die Wandlerschaltung, insbesondere zu geringeren Leitfähigkeits- und Schaltverlusten und damit zu höherer Effizienz bei höheren Schaltfrequenzen, was zu einer höheren Leistungsdichte führt.

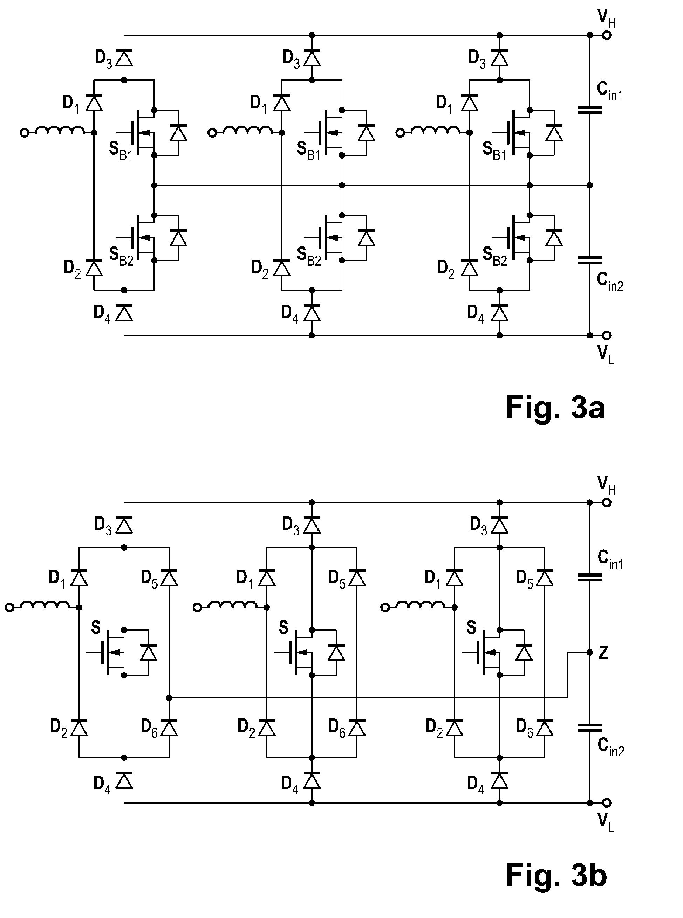

In den Figuren 3a und 3b sind weitere Ausführungsformen für den Eingangs-AC/DC-Wandler dargestellt. Die Eingangs-AC/DC-Wandler der Figuren 3a und 3b entsprechen im Wesentlichen einer Umsetzung der zweiphasigen Eingangs-AC/DC-Wandler der Ausführungsform der Figur 1 bzw. der Ausführungsform der Figur 2b in einen dreiphasigen AC/DC-Wandler. Für die Ausführungsform der Figur 3a heißt dies, dass für jede der Phasen eine Teilschaltung gemäß dem Eingangs-AC/DC-Wandler der Fig. 1 vorgesehen wird, d.h. die Verschaltung der ersten bis vierten Eingangsdiode D₁, D₂, D₃, D₄ und der Eingangshalbleiterschalter S_{B1}, S_{B2} entspricht derjenigen der Figur 1, wobei die jeweiligen Ausgänge, d.h. der Kathodenanschluss der dritten Eingangsdiode D₃ sowie der Anodenanschluss der vierten Eingangsdiode D₄ miteinander verbunden sind, um das hohe bzw. niedrige Eingangspotential V_{H}, V_{L} zur Verfügung zu stellen. Die Knoten zwischen den Eingangshalbleiterschaltern jedes der Teilschaltungen für jede Phase sind miteinander und mit dem Zwischenkreispunkt zwischen den Eingangskapazitäten C_{In1}, C_{In2} verbunden.

Die Ausführungsform der Figur 3b zeigt ebenfalls einen dreiphasigen Eingangs-AC/DC-Wandler, wobei die Anordnung der ersten bis sechsten Eingangsdiode D₁, D₂, D₃, D₄, D₅, D₆ und des dritten Eingangshalbleiterschalters, der der Ausführungsform der Figur 2b entspricht, d.h. jede der Fig. 2b entsprechenden Teilschaltungen ist einer Phase zugeordnet, wobei die Kathodenanschlüsse der jeweiligen dritten Eingangsdioden und die Anodenanschlüsse der jeweiligen vierten Eingangsdioden miteinander verbunden sind und das hohe bzw. niedrige Eingangspotential V_{H}, V_{L} zur Verfügung stellen. Ebenso wie bei der Ausführungsform der Figur 2b, sind die Knoten zwischen der fünften und sechsten Eingangsdiode jeder der Teilschaltungen, d.h. der Kathodenanschluss der sechsten Eingangsdiode, mit dem Zwischenkreispunkt Z zwischen den Eingangskapazitäten C_{In1}, C_{In2} verbunden.

Die dreiphasigen Eingangs-AC/DC-Wandler der Figuren 3a und 3b können ebenso wie die Eingangs-AC/DC-Wandler der Ausführungsformen der Figuren 1, 2a bis 2c mit Hilfe von SiC-Bauelementen ausgebildet werden, um die entsprechenden oben bereits beschriebenen Vorteile zu erhalten.

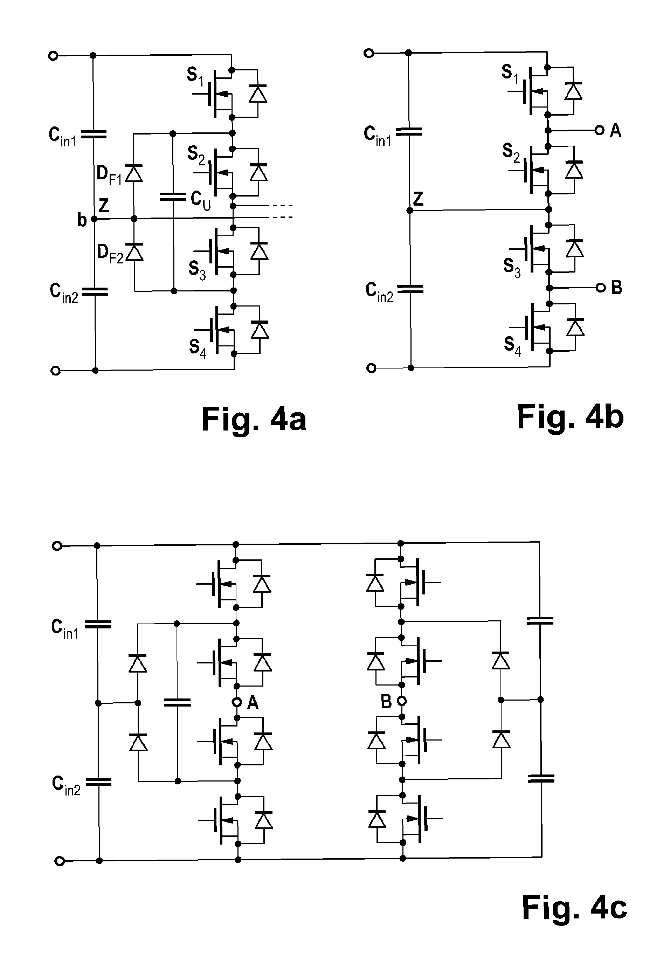

In den Figuren 4a bis 4c sind Ausführungsformen von dreistufigen Umrichtern bzw. 3-Pegel-Umrichtern gezeigt, die beispielsweise den Umrichter 4 der Figur 1 ersetzen könnten.

Der Umrichter der Figur 4a unterscheidet sich von dem Umrichter 4 der Figur 1 dadurch, dass der zweite Umrichterausgangsanschluss B nicht mit dem niedrigen Eingangspotential V_{L} bzw. mit dem entsprechenden zweiten Anschluss des vierten Leistungshalbleiterschalters S₄ verbunden ist, sondern an den Zwischenkreispunkt Z zwischen den Eingangskapazitäten C_{In1}, C_{In2} angeschlossen ist. Der Zwischenkreispunkt Z ist weiterhin über Umrichter-Freilaufdioden D_{F1}, D_{F2} mit den Anschlüssen der Umrichterkapazität C_{U} verbunden. Im Detail sind ein Anodenanschluss einer ersten der Umrichter-Freilaufdioden D_{F1} mit dem Zwischenkreispunkt und ein Kathodenanschluss der ersten Umrichter-Freilaufdiode D_{F1} mit einem ersten Anschluss der Umrichterkapazität C_{U} verbunden. Entsprechend sind ein Anodenanschluss einer zweiten der Umrichter-Freilaufdioden D_{F2} mit dem zweiten Anschluss der Wandlerkapazität C_{U} und ein Kathodenanschluss der zweiten Umrichter-Freilaufdiode D_{F2} mit dem Zwischenkreispunkt Z verbunden.

Die Ausführungsform der Figur 4b zeigt einen weiteren Umrichter, der ebenfalls in einem Zweipegel- bzw. Dreipegel-Modulationsbetrieb betrieben werden kann. Der Umrichter der Figur 4b umfasst eine Serienschaltung von vier Leistungshalbleiterschaltern S₁ bis S₄, wobei ein erster Anschluss des ersten Leistungshalbleiterschalters S₁ mit dem hohen Eingangspotential V_{H}, ein zweiter Anschluss des ersten Leistungshalbleiterschalters S₁ mit einem ersten Anschluss des zweiten Leistungshalbleiterschalters S₂, ein zweiter Anschluss des zweiten Leistungshalbleiterschalters S₂ mit einem ersten Anschluss eines dritten Leistungshalbleiterschalters S₃, der zweite Anschluss des dritten Leistungshalbleiterschalters S₃ mit dem ersten Anschluss des vierten Leistungshalbleiterschalters S₄ und der zweite Anschluss des vierten Leistungshalbleiterschalters S₄ mit dem niedrigen Eingangspotential V_{L} verbunden ist. Der erste Umrichterausgangsanschluss A entspricht dem zweiten Anschluss des ersten Leistungshalbleiterschalters S₁ und der zweite Umrichterausgangsanschluss B entspricht dem zweiten Anschluss des dritten Leistungshalbleiterschalters S₃. Der zweite Anschluss des zweiten Leistungshalbleiterschalters S₂ bzw. der erste Anschluss des dritten Leistungshalbleiterschalters S₃ sind mit dem Zwischenkreispunkt Z verbunden.

Die Ausführungsform der Figur 4c zeigt im Wesentlichen eine Verdopplung der Struktur der Figur 2a in zwei Teilschaltungen, wobei eine erste Teilschaltung zur Bereitstellung des ersten Umrichterausgangsanschlusses A und eine zweite Teilschaltung, die im Wesentlichen identisch zur ersten Teilschaltung (und wie in Fig. 4a) ausgebildet ist, zur Bereitstellung des zweiten Umrichterausgangsanschlusses B zur Verfügung gestellt wird. Die Leistungshalbleiterschalter S₁ bis S₄ der beiden Teilschaltungen werden vorzugsweise zueinander phasenversetzt betrieben, um eine entsprechende Umrichterausgangsspannung U_{A} bereitzustellen. Im Unterschied zur ersten Teilschaltung umfasst die zweite Teilschaltung keine Umrichterkapazität C_{U}.

Alle der oben beschriebenen Ausführungsformen der Umrichter ermöglichen den Zweipegel- bzw. Dreipegel-Modulationsbetrieb, ohne dass die Leistungsfähigkeit des Umrichters beeinträchtigt wird.

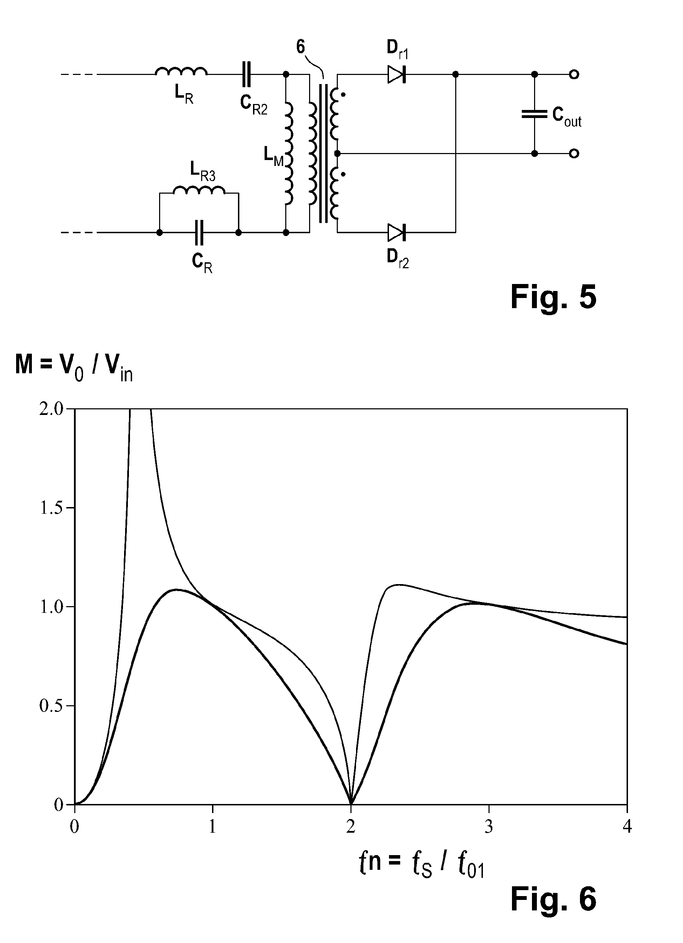

Eine weitere Ausbildung der Resonanzschaltung 5 ist beispielsweise in Figur 5 gezeigt. Die Resonanzschaltung der Figur 5 umfasst Filterschaltungen, wobei der (ersten)

Resonanzinduktivität L_{R} eine zweite Resonanzkapazität C_{R2} in Reihe hinzugeschaltet ist und der (ersten) Resonanzkapazität C_{R} eine dritte Resonanzinduktivität L_{R3} parallel geschaltet wird. Die Verwendung einer derartigen Resonanzschaltung vereinfacht das Anlaufverhalten und die Kurzschlusstragfähigkeit der Wandlerschaltung. Während der Anlaufphase kann der vorgeschaltete Umrichter mit einer Schaltfrequenz betrieben, die höher liegt als die Resonanzfrequenz der Resonanzschaltung. Im Ergebnis wird die Gleichtaktverstärkung des Umrichters 4 reduziert, wodurch der Einschaltstrom in die Wandlerschaltung 1 verringert wird.

In Figur 6 sind die Gleichtaktverstärkungen für verschiedene Güten Q der Resonanzschaltung für die in Figur 5 gezeigte Resonanzschaltung dargestellt. Man erkennt, dass bei höheren Betriebsfrequenzen, z. B. bei dem Doppelten der Resonanzfrequenz f_{S}, die vorwiegend durch die erste Resonanzinduktivität Lᵣ und die erste Resonanzkapazität Cᵣ bestimmt ist, die Parallelschaltung aus der dritten Resonanzinduktivität Cᵣ₃ und der zweiten Resonanzkapazität Cᵣ₂ das Leistungsübertragungsverhalten bestimmt, da diese einen Sperrfilter ausbilden, der die Leistungsübertragung der Wandlerschaltung 1 auf Null reduziert. Ohne die Parallelschaltung der ersten Resonanzkapazität Cᵣ und der dritten Resonanzinduktivität Lᵣ₃ würde sich die Gleichtaktverstärkung ebenso reduzieren, jedoch weniger als mit einer derartigen Parallelschaltung.

Die serielle erste Resonanzinduktivität L_{R} kann als separates Bauelement oder mit Hilfe der Verlustinduktanz implementiert werden. Mit anderen Worten kann die erste Resonanzinduktivität L_{R} integriert in die Primärspule S_{P} realisiert werden, indem die Kopplung zwischen der Primärspule S_{P} und der Sekundärspule S_{S} des Transformators 6 verringert wird. Die zweite parallele Resonanzinduktivität L_{M} kann als separates Bauelement oder mit Hilfe der magnetischen Induktanz des Transformators vorgesehen werden und kann beispielsweise durch eine Unterbrechung des magnetischen Kerns des Transformators 6 ausgebildet werden. Somit lassen sich die erste und zweite Resonanzinduktivität L_{R}, L_{M} durch entsprechende Konfiguration des Transformators 6 ausbilden.

Der Umrichter 4 wird im eingeschwungenen Betrieb unterhalb der Resonanzfrequenz f_{S} betrieben und der Magnetisierungsstrom in der zweiten Resonanzinduktivität L_{M} wird verwendet, um das Schalten beim Spannungsnulldurchgang zu erreichen. Weiterhin wird der Umrichter 4 in einem Bereich betrieben, in dem die Gleichtaktverstärkung unabhängig von Lastvariationen wird. Die Kombination des dreistufigen Umrichters 4 mit der Resonanzschaltung 5 ermöglicht den Betrieb bei einer sehr hohen Frequenz mit hoher Effizienz. Auf diese Weise kann die Leistungsdichte der Wandlerschaltung stark erhöht werden im Vergleich zu den aus dem Stand der Technik bekannten herkömmlichen PWM-Wandlern mit ZVS-Betrieb. Die Möglichkeit der Erhöhung der Schaltfrequenz in der Wandlerschaltung 1 ermöglicht es, die Resonanzfrequenz der Resonanzschaltung 5 ebenfalls zu erhöhen, was in der Regel zu geringer dimensionierten Bauelementen in der Resonanzschaltung 5 führt. Dadurch kann der Bauraum der Resonanzschaltung 5 und somit der Bauraum der gesamten Wandlerschaltung deutlich reduziert werden.

Figur 5 zeigt weiterhin eine alternative Ausführung des Ausgangs-Gleichrichters 7, bei dem zwei Sekundärspulen S_{S} mit der Primärspule S_{P} des Transformators 6 gekoppelt sind. Erste Anschlüsse der Sekundärspulen S_{S} werden miteinander verbunden und zweite Anschlüsse werden über jeweilige Gleichrichterdioden miteinander verbunden, um eine Gleichrichterausgangsspannung bereitzustellen.

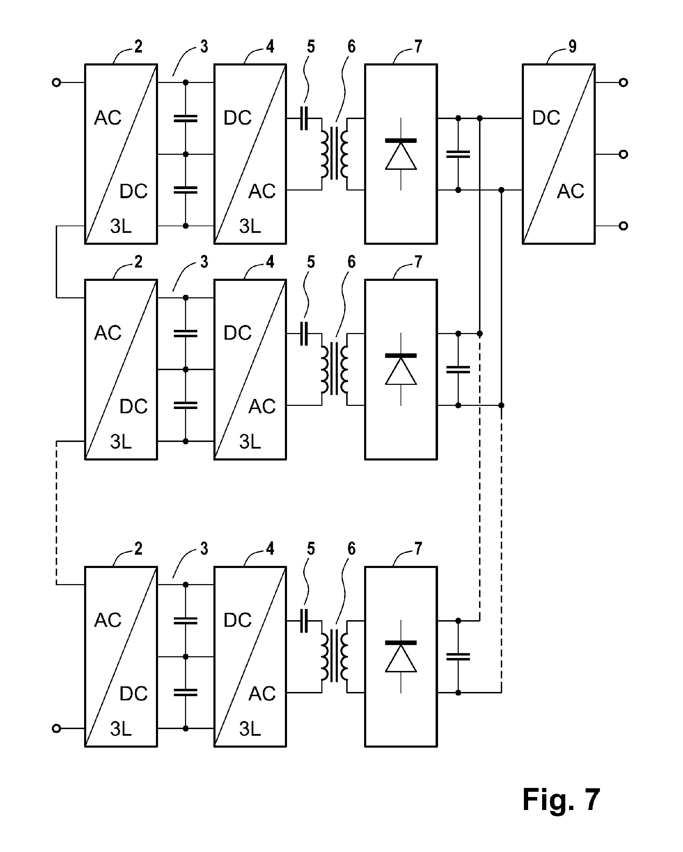

In Figur 7 ist eine Blockdarstellung eines Waqndlersystems mit mehreren Wandlerschaltungen dargestellt. Die einzelnen Schaltungsgruppen sind als Blöcke dargestellt. In der Ausführungsform der Figur 7 sind mehrere Zweige aus Eingangs-AC/DC-Wandler 2, Kapazitäten-Reihenschaltung 3, Umrichter 4, Resonanzschaltung 5, Transformator 6 und Gleichrichter 7 eingangsseitig seriell miteinander verschaltet. Ausgangsseitig werden die Ausgänge der Gleichrichter 7 zueinander parallel geschaltet und erst anschließend einem gemeinsamen Ausgangs-DC/AC-Wandler 9 zugeführt, um die Ausgangswechselspannung bzw. die dreiphasige Ausgangsspannung zu erhalten.

### Bezugszeichenliste

- 1: Wandlerschaltung
- 2: Eingangs-AC/DC-Wandler
- 3: Eingangskapazitäten
- 4: Umwandler
- 5: Resonanzschaltung
- 6: Transformator
- 7: Gleichrichter
- 8: Ausgangs-DC/AC-Wandler
- 10: Steuereinheit
- D₁, D₂, D₃, D₄, D₅, D₆: Eingangsdioden
- S_{B1}, S_{B2}: Eingangshalbleiterschalter
- S_{S1}, S_{S2}: Stellerhalbleiterschalter
- S₁ bis S₄: Leistungshalbleiterschalter
- S_{A1} bis S_{A1}: Ausgangshalbleiterschalter
- C_{In1}, C_{In2}: Eingangskapazitäten
- Lᵣ: erste Resonanzinduktivität
- Lᵣ₂: zweite Resonanzinduktivität
- Cᵣ: erste Resonanzkapazität
- Cᵣ₂: zweite Resonanzkapazität
- L_{M}: zweite Resonanzinduktivität
- C_{U}: Wandlerkapazität
- E₁, E₂: Eingangsanschlüsse
- A, B: Umrichterausgangsanschlüsse
- V_{H}: hohes Eingangspotential
- V_{L}: niedriges Eingangspotential
- C_{A1}, C_{A2}: Ausgangskapazitäten
- Lu, L_{V}, L_{W}: Phaseninduktivitäten
- C_{U}, C_{V}, C_{W}: Phasenkapazitäten
- U_{U}, U_{V}, U_{W}: Phasenspannungen

## Patentansprüche

1. Wanderschaltung (1) zum Umwandeln einer Eingangsgröße in eine Ausgangsgröße, umfassend:
- einen Umrichter (4) zum Empfangen einer von der Eingangsgröße abhängigen Umrichtereingangsgröße und zum Generieren einer getakteten Umrichterausgangsgröße (U_{A});
- einen Transformator (6) zum Umsetzen einer von der Umrichterausgangsgröße (U_{A}) des Umrichter (2) abhängigen Primärgröße in eine die Ausgangsgröße bestimmende Sekundärgröße;
- eine Resonanzschaltung, über die der Umrichter (4) mit dem Transformator (6) verbunden ist, und die so dimensioniert ist, dass als Primärgröße eine Größe bereitgestellt wird, die von der Umrichterausgangsgröße und von einer vorgegebenen Schaltfrequenz des Umrichters (4) abhängt;
wobei der Umrichter (4) einem dreistufigem Umrichter entspricht.

2. Wandlerschaltung (1) nach Anspruch 1, wobei der dreistufige Umrichter (4) eine Serienschaltung eines ersten Leistungshalbleiterschalters (S₁), eines zweiten Leistungshalbleiterschalters (S₂), eines dritten Leistungshalbleiterschalters (S₃)und eines vierten Leistungshalbleiterschalters (S₄) aufweist, wobei ein erster Anschluss des ersten Leistungshalbleiterschalters (S₁) mit einem hohen Potenzial und ein zweiter Anschluss des vierten Leistungshalbleiterschalters (S₄) mit einem niedrigen Potenzial verbunden ist, und wobei ein erster Anschluss des zweiten Leistungshalbleiterschalters (S₂) mit einem zweiten Anschluss des ersten Leistungshalbleiterschalters (S₁) und ein erster Anschluss des vierten Leistungshalbleiterschalters (S₄) mit einem zweiten Anschluss des dritten Leistungshalbleiterschalters (S₃) verbunden ist.

3. Wandlerschaltung (1) nach Anspruch 2, wobei ein zweiter Anschluss des ersten Leistungshalbleiterschalters (S₁) und ein erster Anschluss des vierten Leistungshalbleiterschalters (S₄) über eine Umrichterkapazität (C_{U}) verbunden sind, wobei die Umrichterausgangsgröße an einem ersten Umrichterausgangsanschluss, der einem ersten Anschluss des dritten Leistungshalbleiterschalters (S₃) entspricht, und an einem zweiten Umrichterausgangsanschluss abgreifbar ist, wobei der zweite Umrichterausgangsanschluss dem zweiten Anschluss des vierten Leistungshalbleiterschalters (S₄) entspricht.

4. Wandlerschaltung (1) nach Anspruch 2, wobei ein Zwischenkreispunkt zwischen zwei in Reihe geschalteten Eingangskapazitäten definiert ist, wobei der Zwischenkreispunkt mit eine zweiten Anschluss des zweiten Leistungshalbleiterschalters (S₂) verbunden ist, und wobei die Umrichterausgangsgröße an einem ersten Umrichterausgangsanschluss, der einem ersten Anschluss des zweiten Leistungshalbleiterschalters (S₂) entspricht, und an einem zweiten Umrichterausgangsanschluss abgreifbar ist, der einem zweiten Anschluss des dritten Leistungshalbleiterschalters (S₃) entspricht.

5. Wandlerschaltung (1) nach Anspruch 2, wobei ein Zwischenkreispunkt zwischen zwei in Reihe geschalteten Eingangskapazitäten definiert ist, wobei der Zwischenkreispunkt mit einem zweiten Anschluss des zweiten Leistungshalbleiterschalters (S₂) verbunden ist, und wobei die Umrichterausgangsgröße an einem ersten Umrichterausgangsanschluss, der einem ersten Anschluss des zweiten Leistungshalbleiterschalters (S₂) entspricht, und an einem zweiten Umrichterausgangsanschluss abgreifbar ist, einem zweiten Anschluss des dritten Leistungshalbleiterschalters (S₃) entspricht.

6. Wandlerschaltung (1) nach Anspruch 3, wobei die Leistungshalbleiterschalter (S₁ - S₄) ganz oder teilweise als MOSFETs, JFETs, BJTs oder IGBTs auf Siliziumkarbidbasis ausgebildet sind.

7. Wandlerschaltung (1) nach einem der Ansprüche 1 bis 6 mit einem Gleichrichter (7) zum Gleichrichten der von dem Transformator (6) bereitgestellten Sekundärgröße, um eine Gleichrichterausgangsgröße bereitzustellen, die der Ausgangsgröße entspricht oder von der die Ausgangsgröße abhängt.

8. Wandlerschaltung (1) nach Anspruch 7 mit einem Ausgangs-DC/AC-Wandler (8), der dem Gleichrichter (7) nachgeschaltet ist, um eine Wechselgröße aus der Gleichrichterausgangsgröße als Ausgangsgröße zu generieren.

9. Wandlerschaltung (1) nach einem der Ansprüche 1 bis 8 mit einem Eingangs-AC/DC-Wandler Gleichrichter (7) zum Generieren der Umrichtereingangsgröße aus der Eingangsgröße, die eine Wechselgröße darstellt.

10. Wandlerschaltung (1) nach einem der Ansprüche 1 bis 9, wobei die Resonanzschaltung (5) eine erste Resonanzinduktivität (Lᵣ), die in Reihe zu einer Primärseite des Transformators (6) geschaltet ist, eine zweite Resonanzinduktivität (Lₘ), die parallel zur Primärseite des Transformators (5) geschaltet ist, und eine Resonanzkapazität (Cᵣ), die in Reihe zur Primärseite des Transformators (6) geschaltet ist, aufweist, um eine Bandpass-Filter-Charakteristik zu erhalten.

11. Wandlerschaltung (1) nach Anspruch 10, wobei die Resonanzschaltung (5) weiterhin so ausgebildet ist, um zusätzlich eine Sperrfilter-Charakteristik zu erhalten.

12. Wandlerschaltung (1) nach einem der Ansprüche 1 bis 11, wobei der Transformator (6) mehrere Sekundärspulen aufweist, wobei Ausgänge der Sekundärspulen gleichgerichtet werden und die gleichgerichteten Ausgänge parallel geschaltet sind.

13. Wandlerschaltung (1) nach einem der Ansprüche 1 bis 12, wobei eine Steuereinheit (10) vorgesehen ist, um Leistungshalbleiterschalter (S₁ - S₄) des Umrichters (4) gemäß einer Schaltfrequenz so anzusteuern, dass die Umrichterausgangsgröße (U_{A}) mit einer Frequenz bereitgestellt wird, die kleiner ist als eine Resonanzfrequenz der Resonanzschaltung.

14. Wandlersystem mit mehreren der Wandlerschaltungen (1) nach einem der Ansprüche 1 bis 13, wobei Eingangsseiten der mehreren Wandlerschaltungen seriell verschaltet sind und Wandlerausgänge miteinander parallel verschaltet sind.
